# EUROPEAN PATENT APPLICATION

(11) **EP 1 416 454 A2**
(43) Date of publication of application: **06.05.2004**
(21) Application number: 03256767.9
(22) Date of filing: 27.10.2003
(51) Int. Cl.: G07F 17/42, G07B 17/02, G07F 7/02

(54) **Apparatus and method for creating negotiable items**

(30) Priority: 29.10.2002 US 282607
(71) Applicant: Hewlett-Packard Development Company, L.P., Houston, TX 77070 (US)
(72) Inventor: Briley, Daniel L., Escondido, CA 92026 (US); Davis, Susan M.F., Nampa, ID 83687 (US); Ouchida, Donald B., Corvallis, OR 97330 (US); Blair, Flory H., Washougal, WA 98671 (US); Rasmussen, Steve O., Vancouver, WA 98664 (US)
(74) Representative: Jackson, Richard Eric

(57) **Abstract**

An apparatus and method for creating negotiable items includes, in a system including a network of a governing authority and at least one remote printer, a secure indicia authorized by the governing authority. A preprinted form, authorized by the governing authority, transformable into a negotiable item upon the application of the secure indicia at the remote printer is provided. Further, a database, controlled by the governing authority, for issuing the secure indicia and the preprinted form and accounting for the use of each at the at least one remote printer oversees the creation of the negotiable item.

## Description

### FIELD OF THE INVENTION

This invention relates to an apparatus and method for creating negotiable items. In particular, the invention relates to an apparatus and method for creating negotiable items and includes, in a system of a network of a governing authority and at least one remote printer, a secure indicia authorized by the governing authority. A preprinted form transformable into a negotiable item upon the application of the secure indicia at a remote printer is provided. A database issues the secure indicia and the preprinted form and accounts for the use of each at the at least one remote printer.

### BACKGROUND OF THE INVENTION

As never before, in today's fast-paced society, time is precious. As a result, society seeks to eliminate any areas in our daily schedules that include wasted or dead time. As the demand on people's limited amount of time increases, areas of personal and business life that, heretofore, represented acceptable time investments are exposed as unnecessarily wasteful.

One such area is in the case where an individual wishes to create a negotiable instrument with the approval of a governing authority. Currently, individuals wishing to avail themselves of the governing authority's services must physically appear in the presence of the governing authority in order to create, process, and cash the negotiable instrument.

Thus, there is a need in the art for an apparatus and method for creating a negotiable instrument at the user's location remote from the governing/issuing authority's location.

### SUMMARY OF THE INVENTION

Accordingly, the apparatus and method for creating negotiable items according to one embodiment of the present invention includes, in a system including a network of a governing authority and at least one remote printer, a secure indicia authorized by the governing authority. A preprinted form, authorized by the governing authority, transformable into a negotiable item upon the application of the secure indicia is located at the at least one remote printer. A database, controlled by the governing authority, issues the secure indicia and the preprinted form and accounts for the use of each at the at least one remote printer.

According to another embodiment of the invention, an information based indicia medium is created having instructions for printing a secure indicia so as to create an item of negotiable value in a location remote from an indicia governing authority. Further, instructions are provided for contacting the indicia governing authority and for assimilating indicia information as printed and sending the assimilated information to the governing authority after printing a secure indicia.

According to another embodiment of the invention, in a system having a governing authority for issuing secure information based indicia to at least one remotely connected printer, a method of creating a negotiable instrument at the at least one remotely connected printer includes the step of creating a preprinted form authorized by the governing authority. The preprinted form is located at a remotely located printer. A secure information based indicia is issued to a user of the remotely located printer at which the form is located. The user then applies the secure information based indicia to the preprinted form by means of the remotely located printer so as to create a negotiable instrument.

### DESCRIPTION OF THE DRAWINGS

FIGURE 1 is a schematic diagram of the apparatus and method for creating negotiable items according to one embodiment of the invention; and
FIGURE 2 is a schematic diagram of the invention of Figure 1 according to another embodiment of the invention.

### DETAILED DESCRIPTION OF THE INVENTION

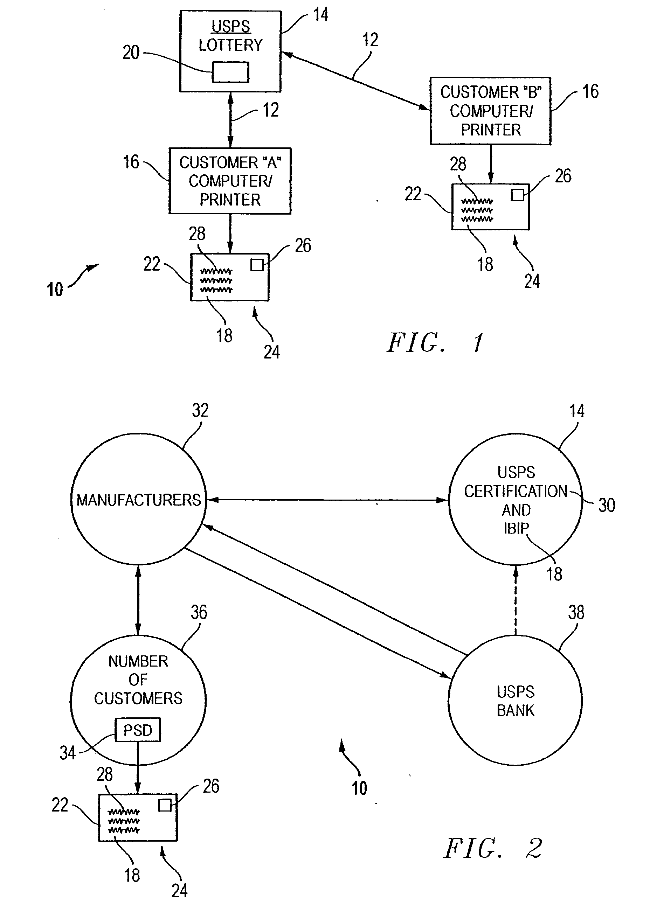

The preferred embodiment of the present invention is illustrated by way of example in Figures 1 - 2. With specific reference to Figure 1, the apparatus and method for creating a negotiable item 10 according to one embodiment of the present invention includes a network 12 of a governing authority 14 and at least one remote printer 16. Secure indicia 18 is authorized by governing authority 14 and stored/accounted for in database 20 by the governing authority 14. Governing authority 14 authorizes preprinted form 22. Preprinted form 22 is transformable into a negotiable item 24 upon the application of secure indicia 18. Database 20 is controlled by the governing authority 14 and is utilized for issuing the secure indicia 18 and the preprinted form 22 and for accounting for the use of each at the at least one remote printer 16. Database 20 may include printer 16 serial/identification numbers and confirmation that printer 16 is authorized to issue secure indicia 18. Database 20 may also include a total of funds (by means of application of secure indicia 18) authorized to be issued by printer 16. Database 20 may include any useful data now known or hereafter developed for use with the invention.

In use, customer "A" initiates contact with governing authority 14 and establishes an account with governing authority 14. Obviously, governing authority 14 is free to set any number of requirements for the establishment of an account. At a minimum however, governing authority 14 requires customer "A" to fund customer "A's" account. Once customer "A" has funded his account with governing authority 14, customer "A" then obtains one or more preprinted form(s) 22 authorized by governing authority 14. Once these preprinted form(s) 22 are located at customer "A's" remote location, customer "A" contacts, through network 12, for example only, governing authority 14 and governing authority 14 issues secure indicia 18 to customer "A". Customer "A" then utilizes remote printer 16 to apply secure indicia 18 to preprinted form 22 so as to create negotiable item 24. Negotiable item 24 is then negotiable in any manner authorized by governing authority 14.

As illustrated in Figure 1, network 12 may include additional remote printers 16 at customer "B's" remote location. However many customers are authorized, the process is the same such that customer B is authorized by governing authority 14 to obtain preprinted form(s) 22 and use secure indicia 18 to create a negotiable item 24.

According to the present invention, governing authority 14 is understood to be any legally sanctioned governing authority now known or hereafter developed. For example only, and not by limitation, governing authority 14 may be a governing authority such as the United States Postal Service (USPS) or state authorized lottery authorities. Additionally, preprinted form 22 may be any authorized preprinted form now known or hereafter developed including, by way of example only and not by limitation, USPS money order forms or state authorized lottery tickets.

Additionally, remotely located printer 16, as used herein, includes computer-printer combinations and printing formats including laser, inkjet, and thermal, and any known or hereafter developed devices for printing indicia.

By way of further explanation only, and not by limitation, secure indicia 18 includes any indicia now known or hereafter developed for providing unique and secure information so as to allow governing authority 14 to authentic the validity of any negotiable item 24 presented to governing authority 14. As a result, secure indicia 18 may include, for purposes of example only and not by limitation, indicia data such as: indicia version number, an algorithm id for the creation of a digital signature, a certificate serial number from the governing authority to the authorized customer, printer manufacturer id, printer model number, an ascending register of the customer's account indicating the total amounts issued through the customer's account, the amount of money issued per transaction, the date of issuance, the originating address of the issuer, the destination address/ name and address of the recipient of the negotiable instrument, a descending register indicating the total amount of funds remaining in the customer's account, and a digital signature, among other things.

Still further, indicia 18 is to be understood to include machine readable information 26 and/or human readable information 28. Machine readable information 26 includes, for example only, two-dimensional bar code and machine readable ASCII code and any other machine readable information now known or hereafter developed. In short, secure indicia 18 is utilized as described above in the apparatus and method for creating negotiable items 10 to create negotiable items 24 for anything requiring security such as, for example only, tickets to events, concerts, SAT exams, or anything else wherein the value implied by the secure indicia 18 is paid for at the point of origin i.e. at the customer's remote location and specifically at remote printer 16.

Again, according to other aspects of the invention, database 20 may include only the printer serial, or other identifying , number and confirmation that funds were deposited into the printer 16. Thereafter the printer 16 decrements funds that it prints. According to another aspect of the invention, governing authority 14 utilizes standard indicia used with pre-approved printing devices 16. Thereafter, database 20 is used to confirm the validity of negotiable item 24 at the point where the negotiable item 24 is redeemed for funds, or the like, at an office of the governing authority 14.

Referring now to Figure 2, the apparatus and method for creating negotiable items 10 of the present invention is disclosed in accordance with another embodiment. Here, the governing authority 14 is the U.S. Postal Service (USPS). The USPS issues manufacturer's certification 30 to manufacturers 32 for the manufacture and distribution of postal security devices 34. Manufacturers 32 distribute the postal security devices 34 to a number of customers 36 at a wide variety of locations remote from the USPS. In return, customers 36 pay manufacturers 32 for the use of postal security devices 34 and setup individual customer USPS accounts at a USPS bank 38. Once the customer's 36 individual account is set up with the USPS bank 38, the postal security device 34 is loaded with funds and capable of issuing secure indicia 18, in the form of the USPS information based indicia program (IBIP). When appropriate, USPS bank 38 makes transfer payments to manufacturers 32 and the USPS governing authority 14.

After customer 36 has established its account through manufacturer 32 of postal security device 34 and received the loaded postal security device 34 capable of printing the secure indicia 18, customer 36 utilizes preprinted form 22 as described above. In one common example, customer 36 utilizes a blank USPS money order form and, by applying secure indicia 18 on the preprinted form 22 at customer's 36 remote location , customer 36 creates a fully negotiable money order form at its remote location without need of having to go to the USPS. As it is created, the pre-loaded postal security device 34 is decremented by the amount of the secure indicia 18 printed. Thereafter, customer 36 may cash the negotiable item 24, money order, at any USPS location or any location authorized by the USPS.

The description of the present embodiments of the invention have been presented for purposes of illustration, but these embodiments are not intended to be exhaustive or to limit the invention to the form disclosed. Many modifications and variations will be apparent to those of ordinary skill in the art. As such, while the present invention has been disclosed in connection with the preferred embodiment thereof, it should be understood that there may be other embodiments which fall within the spirit and scope of the invention as set forth in the following claims.

## Claims

1. An information based indicia medium **characterized by** having instructions for printing a secure indicia so as to create an item of negotiable value in a location remote from an indicia governing authority, for contacting the indicia governing authority and for assimilating indicia information as printed and sending said assimilated information to the governing authority after printing a secure indicia.

2. The medium of Claim 1, wherein the secure indicia is **characterized by** including information selected from a group including: version number, algorithm id for digital signature, certificate serial number from governing authority, device manufacturer id, model number, ascending register, amount issued, date of issuance, originating address, destination address/ recipient, descending register, and digital signature.

3. In a Postal Service (PS) system including a remote digital postage meter, an information based indicia medium **characterized by** having instructions for printing a secure indicia with the remote digital postage meter on a preprinted blank PS money order so as to create a negotiable item at said remote digital postage meter, for contacting the PS and for assimilating secure indicia information as the secure indicia is printed and for sending the assimilated information to the PS after printing a secure indicia.

4. The medium of Claim 3 wherein the secure indicia is **characterized by** including information selected from a group including: version number, algorithm id for digital signature, certificate serial number from PS, postage meter manufacturer id, model number, ascending register, amount issued, date of issuance, originating address, destination address/recipient, descending register, and digital signature.

5. In a system including a network of a governing authority and at least one remote printer, an apparatus for creating negotiable items, the apparatus **characterized by**:
a secure indicia authorized by the governing authority;
a preprinted form, authorized by the governing authority, transformable into a negotiable item upon the application of the secure indicia at a remote printer; and
a data base means, controlled by the governing authority, for issuing the secure indicia and the preprinted form and accounting for the use of each at said at least one remote printer.

6. In a Postal Service (PS)system including a plurality of remotely connected digital postage meters, an apparatus for creating negotiable items in the form of PS money orders at locations other than PS locations, the apparatus **characterized by**:
an information based indicia means for indicating an amount of money in a secure manner at a remotely connected digital postage meter; and
a blank PS money order preprinted form for use at one of said remotely located digital postage meters.

7. The apparatus of Claim 6, further **characterized by** a data base for controlling accounts for the plurality of remotely connected digital postage meters, the information based indicia means and the preprinted PS money order forms.

8. In a system having a governing authority for issuing secure information based indicia to at least one remotely connected printer, a method of creating a negotiable instrument at the at least one remotely connected printer, the method **characterized by** the steps of :
creating a preprinted form authorized by the governing authority;
locating the preprinted form at a remotely located printer;
issuing a secure information based indicia to a user of the remotely located printer at which the preprinted form is located; and
the user applying the information based indicia to the preprinted form by means of the remotely located printer so as to create a negotiable instrument

9. The method of Claim 8, wherein step (a) is further **characterized by** the step of creating a preprinted form from a group including: coupons and tickets.

10. The method of Claim 8, wherein step (c) is further **characterized by** the step of including information selected from a group including: version number, algorithm id for digital signature, certificate serial number from the governing authority, printer manufacturer id, printer model number, ascending register, amount of money issued, date of issuance, originating address, destination address/recipient, descending register, and digital signature.
